# EUROPÄISCHE PATENTSCHRIFT

(11) **EP 3 956 173 B1**
(45) Veröffentlichungstag und Bekanntmachung des Hinweises auf die Patenterteilung: **30.08.2023**
(21) Anmeldenummer: 20708466.6
(22) Anmeldetag: 28.02.2020
(51) Int. Cl.: B60N 3/10, G06Q 30/06

(54) **VERFAHREN ZUM BETREIBEN EINES AUFBEWAHRUNGSSYSTEMS EINES KRAFTFAHRZEUGS FÜR EIN PRODUKT SOWIE AUFBEWAHRUNGSSYSTEM**
METHOD FOR OPERATING A STORAGE SYSTEM FOR A PRODUCT IN A MOTOR VEHICLE, AND STORAGE SYSTEM
PROCÉDÉ D'EXPLOITATION D'UN SYSTÈME DE STOCKAGE D'UN VÉHICULE AUTOMOBILE POUR UN PRODUIT, ET SYSTÈME DE STOCKAGE

(30) Priorität: 17.04.2019 DE 102019002862
(43) Veröffentlichungstag der Anmeldung: 23.02.2022
(73) Patentinhaber: Mercedes-Benz Group AG, 70372 Stuttgart (DE)
(72) Erfinder: RAKOW, Momme, 89231 Neu-Ulm (DE)
(74) Vertreter: Novagraaf Group
(86) Internationale Anmeldenummer: PCT/EP2020/055259
(87) Internationale Veröffentlichungsnummer: WO 2020/212004

(56) Entgegenhaltungen:
- DE-A1-102015 013 074
- DE-A1-102017 210 640

## Beschreibung

Die Erfindung betrifft ein Verfahren zum Betreiben eines Aufbewahrungssystems eines Kraftfahrzeugs für ein Produkt. Es wird eine Produktinformation für das Produkt eines kraftfahrzeugexternen Dienstleisters in Abhängigkeit eines Entscheidungskriteriums auf einer Ausgabeeinrichtung des Aufbewahrungssystems ausgegeben. Es wird eines durch einen Benutzer des Aufbewahrungssystems ausgewähltes Produkt an den Dienstleister mittels einer Übertragungseinrichtung des Aufbewahrungssystems übertragen. Ferner betrifft die Erfindung ein Aufbewahrungssystem.

Die DE 10 2016 225 747 A1 betrifft ein Verfahren nach dem Oberbegriff von Anspruch 1 zum Betreiben eines Kraftfahrzeugs aufweisend die durch eine Kommunikationseinrichtung des Kraftfahrzeugs durchgeführten Schritte: Feststellen einer aktuellen Position des Kraftfahrzeugs und Festlegen eines Umkreises um das Kraftfahrzeug; Ermitteln eines Dienstleisters in dem festgelegten Umkreis; Bereitstellen einer Datenkommunikationsverbindung zu einer kraftfahrzeugexternen Servervorrichtung des ermittelten Dienstleisters; und, mithilfe der bereitgestellten Datenkommunikationsverbindung, Bereitstellen eines Bedienmenüs zum Auswählen einer Dienstleistung. In Abhängigkeit von einer Benutzereingabe erfolgen ein Erzeugen eines Bestellsignals, das die ausgewählte Dienstleistung beschreibt, und ein Erzeugen eines Bezahlsignals, das ein Autorisieren des Dienstleisters zum Einziehen eines monetären Werts von einem Benutzerkonto des Benutzers des Kraftfahrzeugs beschreibt. Beide Signale werden an die Servervorrichtung übertragen.

Aufgabe der vorliegenden Erfindung ist es, ein Verfahren sowie ein Aufbewahrungssystem zu schaffen, mittels welchen eine verbesserte Aufbewahrung eines ausgewählten Produkts durchgeführt werden kann.

Diese Aufgabe wird durch ein Verfahren sowie durch ein Aufbewahrungssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben eines Aufbewahrungssystems eines Kraftfahrzeugs für ein Produkt. Es erfolgt ein Ausgeben einer Produktinformation für das Produkt eines kraftfahrzeugexternen Dienstleisters in Abhängigkeit eines Entscheidungskriteriums auf einer Ausgabeeinrichtung des Aufbewahrungssystems. Es erfolgt ein Übertragen eines durch einen Benutzer des Aufbewahrungssystems ausgewählten Produkts an den Dienstleister mittels einer Übertragungseinrichtung des Aufbewahrungssystems.

Es ist vorgesehen, dass ein Anpassen einer Form einer Aufbewahrungseinrichtung des Aufbewahrungssystems für das ausgewählte Produkt mittels einer Verstellaktuatorik der Aufbewahrungseinrichtung in Abhängigkeit des ausgewählten Produkts durchgeführt wird.

Dadurch ist es ermöglicht, dass die Aufbewahrungseinrichtung, insbesondere eine Oberfläche der Aufbewahrungseinrichtung, an das ausgewählte Produkt angepasst wird.

Insbesondere kann vorgesehen sein, dass eine Oberfläche der Aufbewahrungseinrichtung beziehungsweise die Aufbewahrungseinrichtung an die Form des Produkts angepasst wird. Ferner kann beispielsweise die Aufbewahrungseinrichtung auch an die Produktart angepasst werden. Beispielsweise kann für eine Getränkedose eine Art Cupholder mittels der Aufbewahrungseinrichtung ausgebildet werden, sodass die Getränkedose im Kraftfahrzeug zuverlässig gehalten werden kann. Ferner kann auch die Oberfläche an die Produktart angepasst werden, sodass zum Beispiel ein Verrutschen des Produkts mittels der Aufbewahrungseinrichtung aufgrund der Verformung der Aufbewahrungseinrichtung verhindert werden kann.

Insbesondere kann das Aufbewahrungssystem eine elektronische Recheneinrichtung aufweisen, mittels welchem unterschiedliche Schritte des Verfahrens, beispielsweise die Ansteuerung der Aufbewahrungseinrichtung, durchgeführt werden kann. Des Weiteren kann beispielsweise vorgesehen sein, dass ein Ausgabesignal mittels der elektronischen Recheneinrichtung erzeugt wird, sodass die Produktinformation für das Produkt auf der Ausgabeeinrichtung entsprechend angezeigt werden kann. Ferner kann ein Übertragungssignal mittels der elektronischen Recheneinrichtung erzeugt werden, sodass die Information über das ausgewählte Produkt an den Dienstleister übertragen werden kann. Des Weiteren kann das Anpassungssignal für die Aufbewahrungseinrichtung ebenfalls von der elektronischen Recheneinrichtung erzeugt werden.

Mit anderen Worten kann vorgesehen sein, dass die Aufbewahrungseinrichtung, welche beispielsweise als Interieur oder auch als Exterieur bereitgestellt werden kann, an die Kundenbedürfnisse, insbesondere an das ausgewählte Produkt angepasst wird. Bei der Aufbewahrungseinrichtung kann es sich beispielsweise um eine Mittelkonsole des Kraftfahrzeugs handeln, beziehungsweise um allgemeine Ablagen, die an die jeweilige Größe und Anzahl der Produkte beziehungsweise des Produkts angepasst wird. So kann beispielsweise ein Cupholder bereitgestellt werden oder eine passende Ablage für ein Mobiltelefon.

Insbesondere ist es durch das erfindungsgemäße Aufbewahrungssystem ebenfalls möglich, dass Anzeigesysteme in Durchfahr-Verkaufsstellen, sogenannten Drive-in-Verkaufsstellen, entfallen können, da die entsprechende Produktinformation auf der Ausgabeeinrichtung des Aufbewahrungssystems ausgegeben werden kann. Insbesondere sind die Drive-In -Anzeigen oftmals schlecht lesbar und häufig nur aufwändig aktualisierbar. Dieses Anzeigesystem kann durch die Ausgabeeinrichtung des Aufbewahrungssystems ersetzt werden.

Insbesondere kann die Aufbewahrungseinrichtung eine Vielzahl von unterschiedlichen Oberflächen aufweisen, welche separat an ein Produkt angepasst werden können. Mit anderen Worten kann vorgesehen sein, dass mittels der Aufbewahrungseinrichtung eine Vielzahl von unterschiedlichen Produkten aufbewahrt werden können, wobei in Abhängigkeit dieser unterschiedlichen Produkte dann die Oberfläche der Aufbewahrungseinrichtung entsprechend an diese Vielzahl angepasst werden kann. Beispielsweise kann vorgesehen sein, dass auf der Aufbewahrungseinrichtung eine Getränkedose und ein Mobiltelefon abgelegt beziehungsweise aufbewahrt werden sollen. Dann kann vorgesehen sein, dass mittels der Verstellaktuatorik die Aufbewahrungseinrichtung derart angepasst wird, dass ein Aufbewahrungsort für die Getränkedose und für das Mobiltelefon bereitgestellt werden kann.

Gemäß einer vorteilhaften Ausgestaltungsform wird mittels des Aufbewahrungssystems, insbesondere mittels des Übertragungssystems, ein Bezahlvorgang zum Bezahlen des ausgewählten Produkts durchgeführt. Mit anderen Worten kann eine digitale Bezahlmöglichkeit geschaffen werden, sodass nach der Auswahl des Produkts der Benutzer direkt beim Dienstleister, beispielsweise mittels Online-Bezahlungssystemen, das Produkt entsprechend bezahlen kann, sodass der Benutzer nur noch das Produkt beispielsweise an einem Ausgabeschalter abholen muss. Dadurch kann eine Komfortsteigerung für den Benutzer erreicht werden. Dadurch kann eine zeitaufwändige Aktion am Abholort durch die bereits vorher durchgeführte Bezahlabwicklung realisiert werden. Mit anderen Worten kann vorgesehen sein, dass mittels der elektronischen Recheneinrichtung zusätzlich ein Bezahlsignal erzeugt wird, welches mittels der Übertragungseinrichtung an den Dienstleister beziehungsweise an eine Bezahleinrichtung des Dienstleisters übertragen wird, sodass der Bezahlvorgang bereits abgeschlossen ist. Insbesondere kann hierzu die Übertragungseinrichtung einen gesicherten Übertragungskanal aufweisen, sodass zuverlässig der Bezahlvorgang durchgeführt werden kann. Beispielsweise kann dann das Bezahlsignal entsprechend mittels der elektronischen Recheneinrichtung verschlüsselt werden.

Es hat sich weiterhin als vorteilhaft erwiesen, wenn das Produkt in Abhängigkeit einer Position des Kraftfahrzeugs als Entscheidungskriterium und/oder eine geplante Fahrroute des Kraftfahrzeugs als Entscheidungskriterium und/oder einer präferierten Produkteingabe durch den Benutzer als Entscheidungskriterium angezeigt wird. Beispielsweise kann als Entscheidungskriterium ein Geofencing-Event als die Position angesehen werden. Mit anderen Worten kann vorgesehen sein, sollte das Kraftfahrzeug über eine vorbestimmte Position, dem Geo-Fence, gefahren sein, so wird auf der Ausgabeeinrichtung entsprechend die Produktinformation ausgegeben. Der Geo-Fence kann beispielsweise abhängig von einem Umkreis um den Dienstleister erzeugt werden. Beispielsweise kann um ein Restaurant als Dienstleister ein Umkreis von 50 Kilometern erzeugt werden, und sobald das Kraftfahrzeug sich in diesem Geo-Fence befindet, wird die Produktinformation auf der Ausgabeeinrichtung ausgegeben. Ferner kann beispielsweise vorgesehen sein, dass in Abhängigkeit der geplanten Fahrroute entsprechende Dienstleister vorgeschlagen werden, die das Kraftfahrzeug anfahren kann und deren Produkte als Produktinformation auf der Ausgabeeinrichtung angezeigt werden können. Ferner kann vorgesehen sein, dass beispielsweise der Benutzer vorher eine Produkteingabe macht, mit anderen Worten kann beispielsweise der Benutzer eingeben, dass dieser gerne während der Fahrt mit dem Kraftfahrzeug essen möchte, sodass dann in Abhängigkeit dieser präferierten Produkteingabe durch den Benutzer die entsprechende Produktinformation des Dienstleisters auf der Ausgabeeinrichtung ausgegeben werden kann.

In einer weiteren vorteilhaften Ausgestaltungsform wird die Ausgabeeinrichtung als optische Ausgabeeinrichtung und/oder als akustische Ausgabeeinrichtung bereitgestellt.

Beispielsweise kann als optische Ausgabeeinrichtung ein Bildschirm, insbesondere ein Display, bereitgestellt werden, auf welcher dann die Produktinformation angezeigt werden kann. Beispielsweise kann der Bildschirm auch als berührungssensitiver Bildschirm ausgebildet sein, sodass beispielsweise das Auswählen des Produkts über ein Berühren des Bildschirms, insbesondere der Produktinformation, durchgeführt werden kann. Ferner kann alternativ oder ergänzend die Ausgabeeinrichtung als akustische Ausgabeeinrichtung bereitgestellt werden, sodass beispielsweise die Produktinformation dem Benutzer akustisch bereitgestellt wird und/oder der Benutzer mittels einer Spracheingabe das Produkt bestellen und beispielsweise bezahlen kann. Dadurch ist es ermöglicht, dass einfach und komfortabel der Benutzer das Produkt bestellen kann und insbesondere in Abhängigkeit dieser Eingabe bereits die Aufbewahrungseinrichtung in Abhängigkeit dieser Eingabe angepasst wird.

Ferner hat es sich als vorteilhaft erwiesen, wenn in Abhängigkeit einer Position des Kraftfahrzeugs und/oder einer Fahrtzeit bis zu einem Abholort des Produkts die Form der Aufbewahrungseinrichtung an das Produkt angepasst wird. Beispielsweise kann vorgesehen sein, dass erst bei einem Überfahren eines Geo-Fences als Position des Kraftfahrzeugs die Aufbewahrungseinrichtung entsprechend angepasst wird. Des Weiteren kann vorgesehen sein, dass erst bei einem Unterschreiten einer vorgegebenen Fahrtzeit bis zu dem Abholort des Produkts die Aufbewahrungseinrichtung angepasst wird. Insbesondere kann beispielsweise erst 10 Sekunden, insbesondere 30 Sekunden, insbesondere eine Minute, insbesondere zwei Minuten, insbesondere fünf Minuten vor dem Erreichen des Abholorts die Aufbewahrungseinrichtung an das Produkt angepasst werden. Dadurch kann beispielsweise verhindert werden, dass weitere Produkte, welche sich auf der Aufbewahrungseinrichtung befinden, verrutschen können.

In einer vorteilhaften Ausgestaltungsform wird zum Erzeugen der angepassten Form der Aufbewahrungseinrichtung die Verstellaktuatorik als matrixförmige Verstellaktuatorik mit angepassten Endgeometrien bereitgestellt. Durch die matrixförmige Anordnung der ansteuerbaren Verstellaktuatorik mit angepassten Endgeometrien, kann die Aufbewahrungseinrichtung der Aktuatorik folgen, sodass eine geschlossene Oberfläche erzeugt wird, die unterschiedliche Geometrien annehmen kann. Dadurch lässt sich die Aufbewahrungseinrichtung an die unterschiedlichen geometrischen Formen des Produkts anpassen. Des Weiteren können eine Vielzahl von Produkten mittels der Aufbewahrungseinrichtung gehalten beziehungsweise aufbewahrt werden. Dadurch lässt sich eine auf die Benutzerbedürfnisse adaptierbare Oberfläche für das Kraftfahrzeug sowohl als Interieur als auch als Exterieur bereitstellen. Somit kann der Benutzer das Interieur beziehungsweise Exterieur auf seine persönlichen Bedürfnisse anpassen. Beispielsweise kann eine Mittelkonsole als Aufbewahrungseinrichtung an die jeweilige Größe und Anzahl von Trinkgefäßen, und somit als Cupholder, bereitgestellt werden oder es kann eine passende Ablage für das persönliche Mobiltelefon bereitgestellt werden. Weitere mögliche Anwendungsfelder können zum Beispiel weitere Ablagen, adaptive Düsengeometrien zur Steuerung der Luftführung im Interieur oder im Exterieur zur Beeinflussung der Aerodynamik oder der CW-Werte sein.

Vorteilhaft ist weiterhin, wenn zum Erzeugen der angepassten Form der Aufbewahrungseinrichtung eine flexible Membran der Aufbewahrungseinrichtung mittels der Verstellaktuatorik angepasst wird. Dadurch ist es ermöglicht, dass eine geschlossene Oberfläche mittels der Aufbewahrungseinrichtung bereitgestellt wird. Die flexible Membran lässt sich insbesondere vorteilhaft mit der Verstellaktuatorik derart an das Produkt anpassen, dass dieses zuverlässig und präzise aufbewahrt werden kann. Durch die flexible Membran lässt sich somit eine hochflexible Aufbewahrungseinrichtung zum Aufbewahren des Produkts innerhalb des Kraftfahrzeugs beziehungsweise am Kraftfahrzeug realisieren. Des Weiteren kann durch die geschlossene Oberfläche ein Eindringen von Fremdkörpern in das Aufbewahrungssystem verhindern.

Gemäß einer weiteren vorteilhaften Ausgestaltungsform wird zusätzlich mittels einer Vakuumeinrichtung der Aufbewahrungseinrichtung die angepasste Form der Aufbewahrungseinrichtung erzeugt. Mit anderen Worten wird neben der Verstellaktuatorik zusätzlich eine Vakuumeinrichtung bereitgestellt, mittels welcher die Aufbewahrungseinrichtung, insbesondere die flexible Membran der Aufbewahrungseinrichtung, an die Form des Produkts angepasst werden kann. Dadurch lässt sich hochpräzise die Aufbewahrungseinrichtung an die Form des Produkts beziehungsweise an die Produktart anpassen.

Weiterhin vorteilhaft ist, wenn die Form der Aufbewahrungseinrichtung in Abhängigkeit einer äußeren Form des Produkts und/oder eine Produktart des Produkts angepasst wird. Durch die Anpassung an die äußere Form des Produkts kann zuverlässig das Produkt auf der Aufbewahrungseinrichtung gehalten werden. Durch die Anpassung an die Produktart, beispielsweise bei Flüssigkeiten, kann beispielsweise eine Art Trichter geschaffen werden, sodass bei einem eventuellen Auslaufen der Flüssigkeit aus dem Gefäß die Flüssigkeit dennoch durch die Aufbewahrungseinrichtung gehalten werden kann. Ferner können beispielsweise entsprechende Oberflächen geschaffen werden, um das Produkt halten zu können. Beispielsweise kann, sollte festgestellt werden, dass es sich um ein Mobiletelefon handelt, als Produktart, eine raue Oberfläche mittels der Aufbewahrungseinrichtung geschaffen werden, sodass ein Verrutschen des Mobiltelefons verhindert werden kann.

Ein weiterer Aspekt der Erfindung betrifft ein Aufbewahrungssystem eines Kraftfahrzeugs für ein Produkt mit zumindest einer Ausgabeeinrichtung, einer Übertragungseinrichtung und einer Aufbewahrungseinrichtung. Das Aufbewahrungssystem ist zum Durchführen des Verfahren und einer vorteilhaften Ausgestaltungsform davon ausgebildet. Insbesondere wird das Verfahren mit dem Aufbewahrungssystem durchgeführt.

Ein nochmals weiterer Aspekt der Erfindung betrifft ein Kraftfahrzeug mit einem Aufbewahrungssystem. Das Kraftfahrzeug ist insbesondere als Personenkraftwagen ausgebildet.

Vorteilhafte Ausgestaltungsformen des Verfahrens sind als vorteilhafte Ausgestaltungsformen des Aufbewahrungssystems und des Kraftfahrzeugs anzusehen. Das Aufbewahrungssystem und das Kraftfahrzeug weisen dazu gegenständliche Merkmale auf, welche eine Durchführung des Verfahrens oder eine vorteilhafte Ausgestaltungsform davon ermöglichen.

Ein hierin beschriebenes Verfahren kann auch in Form eines Computerprogramm(produkt)s vorliegen, das das Verfahren auf einer Steuereinheit, beispielsweise der elektronischen Recheneinrichtung, implementiert, wenn es auf der Steuereinheit ausgeführt wird. Ebenso kann ein elektronisch lesbarer mit darauf gespeicherten elektronisch lesbaren Steuerinformationen vorliegen, welche zumindest ein beschriebenes Computerprogrammprodukt umfassen und derart ausgestaltet sind, dass sie bei Verwendung des Datenträgers in einer Steuereinheit einer MR-Anlage ein beschriebenes Verfahren durchführen.

In diesem Ausführungsbeispiel umfasst die elektronische Recheneinrichtung eine Schnittstelle, einen Prozessor und eine Speichereinheit. Bei einer Schnittstelle kann es sich um eine Hardware- oder Softwareschnittstelle handeln (beispielsweise PCI-Bus, USB oder Firewire). Eine Recheneinheit kann Hardware-Elemente oder Software-Elemente aufweisen, beispielsweise einen Mikroprozessor oder ein sogenanntes FPGA (englisches Akronym für "Field Programmable Gate Array"). Eine Speichereinheit kann als nicht dauerhafte Arbeitsspeicher (Random Access Memory, kurz RAM) oder als dauerhafter Massenspeicher (Festplatte, USB-Stick, SD-Karte, Solid State Disk) realisiert sein.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: ein schematisches Ablaufdiagramm einer Ausführungsform des Verfahrens; und
- Fig. 2: eine schematische Perspektivansicht einer Ausführungsform des Aufbewahrungssystems.

In den Fig. sind gleiche oder funktionsgleiche Elemente mit den gleichen Bezugszeichen versehen.

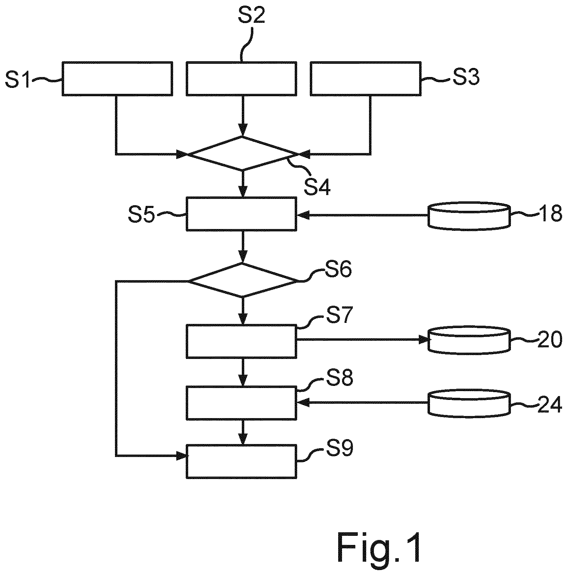

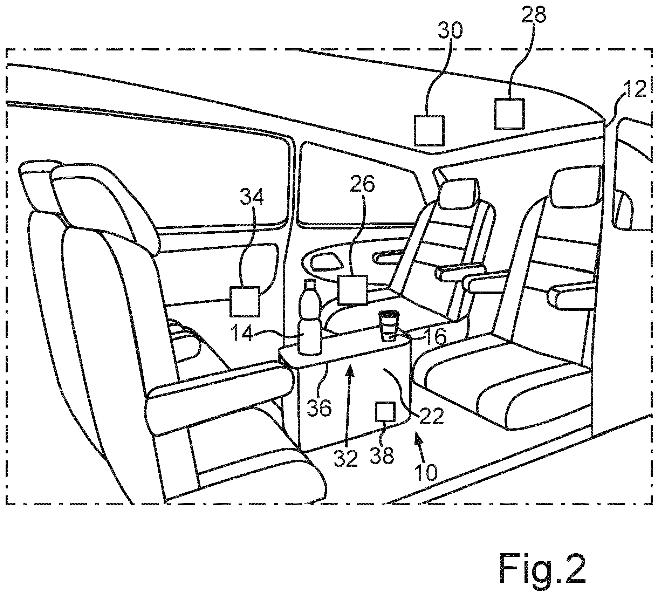

Fig. 1 zeigt in einer schematischen Ansicht ein Ablaufdiagramm einer Ausführungsform des Verfahrens zum Betreiben eines Aufbewahrungssystems 10 (Fig. 2) eines Kraftfahrzeugs 12 (Fig. 2). Das Aufbewahrungssystem 10 ist zum Aufbewahren eines Produkts 14, 16 (Fig. 2) ausgebildet.

Es kann vorgesehen sein, in einem ersten Schritt S1 die Wahl eines Geschäfts über ein Navigationssystems des Kraftfahrzeugs 12 erfolgt. In einem zweiten Schritt S2 kann das Erreichen einer Position des Kraftfahrzeugs 12 bereitgestellt werden. Ferner können in einem dritten Schritt S3 weitere Entscheidungskriterien zum vierten Schritt S4, welcher den Start des Verfahrens beschreibt, führen. In einem fünften Schritt S5 kann überprüft werden, ob das Produkt 14, 16 durch einen Dienstleister zur Verfügung steht. Hierzu kann beispielsweise über eine Datenbank 18, welche beispielsweise kraftfahrzeugextern bereitgestellt werden kann, ein entsprechender Abgleich durchgeführt werden. In einem sechsten Schritt S6 findet dann eine Entscheidung statt, ob der Service beziehungsweise die Dienstleistung bereitgestellt werden kann oder nicht. Sollte die Dienstleistung nicht bereitgestellt werden, so wird vom sechsten Schritt S6 in den neunten Schritt S9 übergegangen, in welchem das Verfahren beendet wird. Sollte die Dienstleistung verfügbar sein, so kann in einem siebten Schritt S7 eine Bezahlung der Dienstleistung beziehungsweise des Produkts 14, 16 durchgeführt werden. Hierzu kann vorgesehen sein, dass mittels eines Abrechnungssystems 20 ein entsprechender Bezahlvorgang durchgeführt werden kann. Im achten Schritt S8 erfolgt dann insbesondere die Ausgabe der Produktinformation und/oder die Anpassung einer Aufbewahrungseinrichtung 22 (Fig. 2) des Aufbewahrungssystems 10. Die Dienstleistung beziehungsweise das Produkt 14, 16 kann beispielsweise über einen kraftfahrzeugexternen Server 24 oder über eine Webseite oder eine Applikation bereitgestellt werden. Nach dem achten Schritt S8 erfolgt dann im neunten Schritt S9 das Ende des Verfahrens.

Erfindungsgemäß ist vorgesehen, dass beim Verfahren zum Betreiben des Aufbewahrungssystems 10 des Kraftfahrzeugs 12 für das Produkt 14, 16 ein Ausgeben einer Produktinformation eines kraftfahrzeugexternen Dienstleisters in Abhängigkeit eines Entscheidungskriteriums auf einer Ausgabeeinrichtung 26, 28 (Fig. 2) des Aufbewahrungssystems 10 ausgegeben wird. Es erfolgt ein Übertragen eines durch einen Benutzer des Aufbewahrungssystems 10 ausgewählten Produkts 14, 16 an den Dienstleister mittels einer Übertragungseinrichtung 30 (fig. 2) des Aufbewahrungssystems 10. Es ist vorgesehen, dass im achten Schritt S8 eine Form der Aufbewahrungseinrichtung 22 des Aufbewahrungssystems 10 für das ausgewählte Produkt 14, 16 mittels einer Verstellaktuatorik 32 (Fig. 2) der Aufbewahrungseinrichtung 22 in Abhängigkeit des ausgewählten Produkts 14, 16 angepasst wird.

Insbesondere zum Durchführen des Verfahrens kann das Aufbewahrungssystem 10 ferner über eine elektronische Recheneinrichtung 34 verfügen, mittels welcher Verfahrensschritte durchgeführt werden können.

Dadurch ist es ermöglicht, dass die Aufbewahrungseinrichtung 22, insbesondere eine Oberfläche der Aufbewahrungseinrichtung 22, an das ausgewählte Produkt 14, 16 angepasst wird. Insbesondere kann vorgesehen sein, dass eine Oberfläche der Aufbewahrungseinrichtung 22 beziehungsweise die Aufbewahrungseinrichtung 22 an die Form des Produkts 14, 16 angepasst wird. Ferner kann beispielsweise die Aufbewahrungseinrichtung 22 auch an die Produktart angepasst werden. Beispielsweise kann für eine Getränkedose eine Art Cupholder mittels der Aufbewahrungseinrichtung 22 ausgebildet werden, sodass die Getränkedose im Kraftfahrzeug 12 zuverlässig gehalten werden kann. Ferner kann auch die Oberfläche an die Produktart angepasst werden, sodass zum Beispiel ein Verrutschen des Produkts 14, 16 mittels der Aufbewahrungseinrichtung 22 aufgrund der Verformung der Aufbewahrungseinrichtung 22 verhindert werden kann.

Ferner kann insbesondere vorgesehen sein, dass mittels des Aufbewahrungssystems 10, insbesondere mittels der Übertragungseinrichtung 30, der Bezahlvorgang zum Bezahlen des ausgewählten Produkts 14, 16 im siebten Schritt S7 durchgeführt wird. Des Weiteren kann vorgesehen sein, dass das Produkt 14, 16 in Abhängigkeit der Position, wie im zweiten Schritt S2, des Kraftfahrzeugs 12 als Entscheidungskriterium und/oder einer geplanten Fahrroute, wie im ersten Schritt S1 angegeben, des Kraftfahrzeugs 12 als Entscheidungskriterium und/oder einer präferierten Produkteingabe durch den Benutzer als Entscheidungskriterium angezeigt wird.

Ferner kann vorgesehen sein, dass in Abhängigkeit einer Position des Kraftfahrzeugs 12 und/oder einer Fahrtzeit bis zu einem Abholort des Produkts 14, 16 die Form der Aufbewahrungseinrichtung 22 an das Produkt 14, 16 angepasst wird.

Fig. 2 zeigt in einer schematischen Perspektivansicht eine Ausführungsform des Aufbewahrungssystems 10. Im vorliegenden Ausführungsbeispiel weist das Aufbewahrungssystem 10 eine Ausgabeeinrichtung 26, 28, vorliegend zwei Ausgabeeinrichtungen 26, 28, auf, wobei die Ausgabeeinrichtung 26, 28 als optische Ausgabeeinrichtung 26 und/oder als akustische Ausgabeeinrichtung 28 bereitgestellt wird.

Ferner kann vorgesehen sein, dass zum Erzeugen der angepassten Form der Aufbewahrungseinrichtung 22 die Verstellaktuatorik 32 als matrixförmige Verstellaktuatorik 32 mit angepassten Endgeometrien bereitgestellt wird. Ferner kann zum Erzeugen der angepassten Form der Aufbewahrungseinrichtung 22 eine flexible Membran 36 der Aufbewahrungseinrichtung 22 mittels der Verstellaktuatorik 32 angepasst werden.

Des Weiteren kann vorgesehen sein, dass zusätzlich mittels einer Vakuumeinrichtung 38 der Aufbewahrungseinrichtung 22 die angepasste Form der Aufbewahrungseinrichtung 32 erzeugt wird.

Die Form der Aufbewahrungseinrichtung 22 kann insbesondere in Abhängigkeit einer äußeren Form des Produkts 14, 16 und/oder einer Produktart des Produkts 14, 16 angepasst werden. Durch die Anpassung an die äußere Form des Produkts 14, 16 kann zuverlässig das Produkt 14, 16 auf der Aufbewahrungseinrichtung 22 gehalten werden.

Durch die Anpassung an die Produktart, beispielsweise bei Flüssigkeiten, kann beispielsweise eine Art Trichter geschaffen werden, sodass bei einem eventuellen Auslaufen der Flüssigkeit aus dem Gefäß die Flüssigkeit dennoch durch die Aufbewahrungseinrichtung 22 gehalten werden kann. Ferner können beispielsweise entsprechende Oberflächen geschaffen werden, um das Produkt 14, 16 halten zu können. Beispielsweise kann, sollte festgestellt werden, dass es sich um ein Mobiletelefon handelt, als Produktart, eine raue Oberfläche mittels der Aufbewahrungseinrichtung 22 geschaffen werden, sodass ein Verrutschen des Mobiltelefons verhindert werden kann.

Insbesondere ist im vorliegenden Ausführungsbeispiel das Produkt 14 als Flasche ausgebildet und das Produkt 16 als Getränkebecher. Mit anderen Worten ist im vorliegenden Ausführungsbeispiel ein Cupholder mittels der Aufbewahrungseinrichtung 22 ausgebildet. Es ist möglich, dass weitere Formen, beispielsweise für die Ablage eines Mobiltelefons, ausgebildet werden können.

## Patentansprüche

1. Verfahren zum Betreiben eines Aufbewahrungssystems (10) eines Kraftfahrzeugs (12) für ein Produkt (14, 16), mit den Schritten:
- Ausgeben einer Produktinformation für das Produkt (14, 16) eines kraftfahrzeugexternen Dienstleisters in Abhängigkeit eines Entscheidungskriteriums auf einer Ausgabeeinrichtung (26, 28) des Aufbewahrungssystems (10); (S8)
- Übertragen eines durch einen Benutzer des Aufbewahrungssystems (10) ausgewählten Produkts (14, 16) an den Dienstleister mittels einer Übertragungseinrichtung (30) des Aufbewahrungssystems (10);
**gekennzeichnet durch** den Schritt:
- Anpassen einer Form einer Oberfläche einer Aufbewahrungseinrichtung (22) des Aufbewahrungssystems (10) für das ausgewählte Produkt (14, 16) mittels einer Verstellaktuatorik (32) der Aufbewahrungseinrichtung (22) in Abhängigkeit des ausgewählten Produkts (14, 16) (S8).

2. Verfahren nach Anspruch 1,
**dadurch gekennzeichnet, dass**
mittels des Aufbewahrungssystems (10), insbesondere mittels der Übertragungseinrichtung (30), ein Bezahlvorgang zum Bezahlen des ausgewählten Produkts (14, 16) durchgeführt wird (S7).

3. Verfahren nach einem der Ansprüche 1 oder 2,
**dadurch gekennzeichnet, dass**
das Produkt (14, 16) in Abhängigkeit einer Position des Kraftfahrzeugs (12) als Entscheidungskriterium (S2) und/oder einer geplanten Fahrroute des Kraftfahrzeugs (12) als Entscheidungskriterium (S1) und/oder einer präferierten Produkteingabe durch den Benutzer als Entscheidungskriterium angezeigt wird.

4. Verfahren nach einem der vorhergehenden Ansprüche,
**dadurch gekennzeichnet, dass**
die Ausgabeeinrichtung (26, 28) als optische Ausgabeeinrichtung (26) und/oder als akustische Ausgabeeinrichtung (28) bereitgestellt wird.

5. Verfahren nach einem der vorhergehenden Ansprüche,
**dadurch gekennzeichnet, dass**
in Abhängigkeit einer Position des Kraftfahrzeugs (12) und/oder einer Fahrtzeit bis zu einem Abholort des Produkts (14, 16) die Form der Aufbewahrungseinrichtung (22) an das Produkt (14, 16) angepasst wird.

6. Verfahren nach einem der vorhergehenden Ansprüche,
**dadurch gekennzeichnet, dass**
zum Erzeugen der angepassten Form der Aufbewahrungseinrichtung (22) die Verstellaktuatorik (32) als matrixförmige Verstellaktuatorik mit angepassten Endgeometrien bereitgestellt wird.

7. Verfahren nach einem der vorhergehenden Ansprüche,
**dadurch gekennzeichnet, dass**
zum Erzeugen der angepassten Form der Aufbewahrungseinrichtung (22) eine flexible Membran (36) der Aufbewahrungseinrichtung (22) mittels der Verstellaktuatorik (32) angepasst wird.

8. Verfahren nach einem der vorhergehenden Ansprüche,
**dadurch gekennzeichnet, dass**
zusätzlich mittels einer Vakuumeinrichtung (38) der Aufbewahrungseinrichtung (22) die angepasste Form der Aufbewahrungseinrichtung (22) erzeugt wird.

9. Verfahren nach einem der vorhergehenden Ansprüche,
**dadurch gekennzeichnet, dass**
die Form der Aufbewahrungseinrichtung (22) in Abhängigkeit einer äußeren Form des Produkts (14, 16) und/oder einer Produktart des Produkts (14, 16) angepasst wird.

10. Aufbewahrungssystem (10) eines Kraftfahrzeugs (12) für ein Produkt (14, 16) mit zumindest einer Ausgabeeinrichtung (26, 28), einer Übertragungseinrichtung (30) und einer Aufbewahrungseinrichtung (22), wobei das Verfahren nach einem der Ansprüche 1 bis 9 mittels des Aufbewahrungssystems (10) durchgeführt wird.

## Claims

1. Method for operating a storage system (10) of a motor vehicle (12) for a product (14, 16), comprising the steps of:
- outputting product information for the product (14, 16) of a service provider external to the motor vehicle on an output device (26, 28) of the storage system (10) according to a decision criterion; (S8)
- transmitting a product (14, 16) selected by a user of the storage system (10) to the service provider by means of a transmission device (30) of the storage system (10);
**characterized by** the step of:
- adapting a shape of a surface of a storage device (22) of the storage system (10) for the selected product (14, 16) by means of an adjusting actuator system (32) of the storage device (22) according to the selected product (14, 16) (S8).

2. Method according to claim 1,
**characterized in that**
by means of the storage system (10), in particular by means of the transmission device (30), a payment process for paying for the selected product (14, 16) is carried out (S7).

3. Method according to either claim 1 or claim 2,
**characterized in that**
the product (14, 16) is displayed according to a position of the motor vehicle (12) as a decision criterion (S2) and/or according to a planned driving route of the motor vehicle (12) as a decision criterion (S1) and/or according to a preferred product input by the user as a decision criterion.

4. Method according to any of the preceding claims,
**characterized in that**
the output device (26, 28) is provided as an optical output device (26) and/or as an acoustic output device (28).

5. Method according to any of the preceding claims,
**characterized in that**
the shape of the storage device (22) is adapted to the product (14, 16) according to a position of the motor vehicle (12) and/or a travel time up to a pick-up location of the product (14, 16).

6. Method according to any of the preceding claims,
**characterized in that**
in order to produce the adapted shape of the storage device (22), the adjusting actuator system (32), in the form of a matrix-like adjusting actuator system, is provided with adapted end geometries.

7. Method according to any of the preceding claims,
**characterized in that**
a flexible membrane (36) of the storage device (22) is adapted by means of the adjusting actuator system (32) to produce the adapted shape of the storage device (22).

8. Method according to any of the preceding claims,
**characterized in that**
the adapted shape of the storage device (22) is additionally produced by means of a vacuum device (38) of the storage device (22).

9. Method according to any of the preceding claims,
**characterized in that**
the shape of the storage device (22) is adapted according to an outer shape of the product (14, 16) and/or a product type of the product (14, 16).

10. Storage system (10) of a motor vehicle (12) for a product (14, 16), comprising at least one output device (26, 28), a transmission device (30) and a storage device (22), wherein the method according to any of claims 1 to 9 is carried out by means of the storage system (10).

## Revendications

1. Procédé pour le fonctionnement d'un système de stockage (10) d'un véhicule automobile (12) pour un produit (14, 16), comportant les étapes :
- d'émission d'une information de produit pour le produit (14, 16) d'un fournisseur de services externe au véhicule en fonction d'un critère de décision sur un dispositif d'émission (26, 28) du système de stockage (10) ; (S8)
- de transmission d'un produit (14, 16) sélectionné par un utilisateur du système de stockage (10) au fournisseur de services au moyen d'un dispositif de transmission (30) du système de stockage (10) ;
**caractérisé par** l'étape :
- d'adaptation d'une forme d'une surface d'un dispositif de stockage (22) du système de stockage (10) pour le produit sélectionné (14, 16) au moyen d'un actionneur de réglage (32) du dispositif de stockage (22) en fonction du produit sélectionné (14, 16) (S8).

2. Procédé selon la revendication 1,
**caractérisé en ce que**
un processus de paiement pour le paiement du produit sélectionné (14, 16) est réalisé au moyen du système de stockage (10), en particulier au moyen du dispositif de transmission (30) (S7).

3. Procédé selon l'une des revendications 1 ou 2,
**caractérisé en ce que**
le produit (14, 16) est affiché en fonction d'une position du véhicule automobile (12) en guise de critère de décision (S2) et/ou d'un itinéraire de conduite planifié du véhicule automobile (12) en guise de critère de décision (S1) et/ou d'une entrée du produit préférée par l'utilisateur en guise de critère de décision.

4. Procédé selon l'une quelconque des revendications précédentes,
**caractérisé en ce que**
le dispositif d'émission (26, 28) est fourni sous la forme d'un dispositif d'émission optique (26) et/ou sous la forme d'un dispositif d'émission acoustique (28).

5. Procédé selon l'une quelconque des revendications précédentes,
**caractérisé en ce que**
la forme du dispositif de stockage (22) est adaptée au produit (14, 16) en fonction d'une position du véhicule automobile (12) et/ou d'un temps de conduite jusqu'à un lieu de retrait du produit (14, 16).

6. Procédé selon l'une quelconque des revendications précédentes,
**caractérisé en ce que**
l'actionneur de réglage (32) est fourni sous la forme d'un actionneur de réglage sous forme de matrice avec une géométrie finale adaptée pour la génération de la forme adaptée du dispositif de stockage (22).

7. Procédé selon l'une quelconque des revendications précédentes,
**caractérisé en ce que**
une membrane flexible (36) du dispositif de stockage (22) est adaptée au moyen de l'actionneur de réglage (32) pour la génération de la forme adaptée du dispositif de réglage (22).

8. Procédé selon l'une quelconque des revendications précédentes,
**caractérisé en ce que**
en outre, la forme adaptée du dispositif de stockage (22) est générée au moyen d'un dispositif de mise sous vide (38) du dispositif de stockage (22).

9. Procédé selon l'une quelconque des revendications précédentes,
**caractérisé en ce que**
la forme du dispositif de stockage (22) est adaptée en fonction d'une forme externe du produit (14, 16) et/ou d'un type de produit du produit (14, 16).

10. Système de stockage (10) d'un véhicule automobile (12) pour un produit (14, 16) comportant au moins un dispositif d'émission (26, 28), un dispositif de transmission (30) et un dispositif de stockage (22), dans lequel le procédé selon l'une des revendications 1 à 9 est réalisé au moyen du système de stockage (10).
